(19) Europäisches Patentamt / European Patent Office / Office européen des brevets

(11) **EP 3 163 824 A1**

(12) **EUROPEAN PATENT APPLICATION**

(43) Date of publication:
03.05.2017 Bulletin 2017/18

(51) Int Cl.:
***H04L 25/03*** (2006.01)

(21) Application number: 15192386.9

(22) Date of filing: 30.10.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.
Longgang District
Shenzhen, Guangdong 518129 (CN)**

(72) Inventor: **XU, Baicheng
16440 Kista (SE)**

(74) Representative: **Goddar, Heinz J. et al
Boehmert & Boehmert
Anwaltspartnerschaft mbB
Patentanwälte Rechtsanwälte
Pettenkoferstrasse 20-22
80336 München (DE)**

(54) **MIMO DETECTION BASED ON GRADIENT SEARCHING**

(57)     A MIMO detector for estimating from a plurality of received signals a transmitted vector of symbols that have been transmitted with a plurality of transmitters, wherein the MIMO detector comprises a gradient unit configured to determine a gradient of an error measure between a vector and the plurality of received signals, a search unit configured to determine one or more candidate vectors by moving from an initial vector into one or more search directions indicated by one or more elements of a gradient of the initial vector, and an estimation unit configured to determine an estimate of the transmitted vector based on the one or more candidate vectors.

determining a gradient of an error measure between an initial grid and the plurality of received signals — 210

determining one or more candidate grids by moving from the initial grid into one or more search directions indicated by one or more elements of the gradient of the initial grid — 220

determining an estimate of the transmitted grid based on the one or more candidate grids — 230

200

**FIG. 2**

**Description**

TECHNICAL FIELD

The present invention relates to a MIMO detector and a method for estimating from a plurality of received signals a transmitted vector of symbols that have been transmitted with a plurality of transmitters. The present invention also relates to a computer-readable medium.

BACKGROUND

Multiple-Input and Multiple-Output (MIMO) is an effective technology to improve the data rate in wireless communication systems. For example, in LTE release 10, 8 layers transmission is supported and the data rate can reach 3 Gbps.

The MIMO system model is given by:

$$Y = HX + n$$

where $X$ is the vector of transmitted symbols with size $N_T \times 1$, in which each element in $X$ belongs to the finite-alphabet set $\Omega$, e.g., QAM constellation; $Y$ is the vector of received signals with size $N_R \times 1$; $H$ is the channel matrix with size $N_R \times N_T$; and $n$ is a vector of noise added on the received signals.

$$X = \begin{bmatrix} x_1 \\ \vdots \\ x_{N_T} \end{bmatrix}, Y = \begin{bmatrix} y_1 \\ \vdots \\ y_{N_R} \end{bmatrix}, H = \begin{bmatrix} h_{11} & \cdots & h_{1N_R} \\ \vdots & \ddots & \vdots \\ h_{N_T1} & \cdots & h_{N_TN_R} \end{bmatrix}, n = \begin{bmatrix} n_1 \\ \vdots \\ n_{N_R} \end{bmatrix}$$

Note that the noise in a MIMO system is usually Additive White Gaussian Noise (AWGN). If not, the optimal solution is to apply the pre-whitening before MIMO detection.

In general, maximum-a-posteriori, MAP, is the detector with the best performance. MAP becomes maximum likelihood, ML, when the elements in the finite-alphabet set $\Omega$ have equal probability of transmission. Since the assumption of equal transmission probability for different elements usually holds true, the best receivers are ML receivers for most of the cases. The hard decision of ML is given by:

$$\widehat{X} = \arg \min_{X \in \Omega^{N_T}} \|Y - HX\|^2$$

However, the optimal performance of ML comes at the cost of a high complexity $O(M^{N_T})$. For example, in 4 layers transmission with 64QAM, ML needs to try 16777216 hypotheses of $X$, which is unaffordable in a receiver.

To balance the complexity and performance, different kinds of MIMO detectors have been presented:

- Linear equalizer, e.g., minimum mean-squared error, MMSE;
- Matrix decomposition based, e.g., Sphere Decoder and its variants;
- Tabu Search, i.e. searching the nearby vectors from start position to reach the one with minimum square error.

MMSE has low complexity at the price of poor performance.

Sphere decoding is regarded as an alternative solution to ML detection, with affordable complexity. But its complexity is sensitive to the constellation size and the number of transmission layers, which is not suitable for transmission with massive layers.

Tabu Search is regarded as suitable for massive layers transmission, but has high complexity and computation requirement.

SUMMARY

The objective of the present invention is to provide a MIMO detector and a method for estimating from a plurality of received signals a transmitted vector of symbols that have been transmitted with a plurality of transmitters, wherein the MIMO detector and the method overcome one or more of the above-mentioned problems of the prior art.

In particular, an objective of this invention can include improving the MIMO detection to reach ML-like performance with low complexity.

A first aspect of the invention provides a MIMO detector for estimating from a plurality of received signals a transmitted vector of symbols that have been transmitted with a plurality of transmitters, wherein the MIMO detector comprises:

- a gradient unit configured to determine a gradient of an error measure between a vector and the plurality of received signals,
- a search unit configured to determine one or more candidate vectors by moving from an initial vector into one or more search directions indicated by one or more elements of a gradient of the initial vector, and
- an estimation unit configured to determine an estimate of the transmitted vector based on the one or more candidate vectors.

It is understood that instead of an error measure (which assigns a low value to a vector that corresponds well to the plurality of received signals) also a score function can be used that assigns e.g. a high value to a vectors that corresponds well to the plurality of received signals.

In embodiments of the invention, a vector can be any plurality of values.

The MIMO detector of the first aspect is configured to search along a direction indicated by the gradient of an error measure, for example an error measured defined by a square of a norm of a difference between vectors. For example, the error measure can be based on a square of the norm between the candidate vector $Y$ and a channel matrix multiplied with a vector $X$ of received signals. In particular, the error measure can be given by $\|Y - HX\|^2$.

The complexity of the MIMO detector of the first aspect increases just linearly with the number of transmission layers, which is suitable for different numbers of transmission layers.

Unlike ML and SD, whose complexity depends on the constellation size and the number of transmission layers, the complexity of the MIMO detector of the first aspect mainly depends on a number of iterations and a number of searching layers. Hence, its complexity is not sensitive to the constellation size and the number of transmission layers.

The gradient here can be a generalization of the usual concept of a derivative of a function in one dimension to a function in several dimensions. If $F(x_1, x_2, \cdots x_N)$ is a differentiable, scalar-valued function of standard Cartesian coordinates in Euclidean space, its gradient is the vector $\nabla F$ whose components are the $N$ partial derivatives of $F$.

$$\nabla F = \begin{bmatrix} \dfrac{\partial F}{\partial x_1} \\ \vdots \\ \dfrac{\partial F}{\partial x_N} \end{bmatrix}$$

In a first implementation of the MIMO detector according to the first aspect, the search unit is configured to select the one or more search directions based on one or more elements of the gradient by selecting a predetermined number of elements of the gradient which have a highest absolute value.

In other words, the search unit can be configured to search directly in a gradient direction. Also, the search can be carried out in one or more directions that correspond to one or more dimensions where one or more elements of the gradient have a highest absolute value or a highest value and a second-highest value that is within a predetermined range of the highest value.

In other embodiments, the search unit can be configured to search in the one or more directions that correspond to elements of the gradient vector that have an absolute value higher than a predetermined threshold value. The threshold value can also be determined based on an absolute value of the one or more elements of the gradient vector.

The MIMO detector of the first aspect has the advantage that it can be efficiently implemented and perform a search in directions where e.g. the error measure is most likely to decrease. Thus, better estimates of the transmitted symbols can be found.

In a second implementation of the MIMO detector according to the first aspect, moving into a search direction comprises moving a step with a step size equal to a minimum distance between two points in a constellation of a modulation of the transmitted symbols.

This has the advantage that it is more likely that a new valid position in the constellation diagram is reached.

In a third implementation of the MIMO detector according to the first aspect, the search unit is configured to reject a candidate vector if it is not within a constellation of a modulation of the transmitted symbols.

This has the advantage that it is ensured that non-valid candidate vectors are rejected. Hence, an unnecessary search based on this vectors can be avoided, which improved reliability and efficiency of the MIMO detector.

In a fourth implementation of the MIMO detector according to the first aspect, the search unit is configured to determine a plurality of layers of candidate vectors by iteratively:

a) moving from an initial vector into one or more search directions to obtain one or more candidate vectors, and
b) setting the one or more candidate vectors as new initial vectors, and continuing with step a).

This has the advantage that iteratively better candidate vectors can be determined. By setting e.g. more than one candidate vectors as new initial vectors, a plurality of directions can be explored for the search.

The iteration can be performed a predetermined number of times. Thus, a plurality of "searching layers" can be created. In the following, a block that carries out the above steps a) and b) (and possibly further steps) is also referred to Basic gradient search, Basic GS.

In a fifth implementation of the MIMO detector according to the first aspect the MIMO detector is configured to:

a) invoke the search unit with one or more initial vectors to determine one or more candidate vectors,
b) select one or more selected candidate vectors from one or more current candidate vectors of a current iteration and/or from one or more previous candidate vectors of one or more previous iterations, and set the one or more selected candidate vectors as initial vectors and continue with step a).

This has the advantage that iteratively a large number of candidate vectors can be explored. Because the candidate vectors are selected from one or more previous candidate vectors, previous vectors with a low error measure will not be ignored. Thus an optimal vector can be detected.

In a sixth implementation of the MIMO detector according to the first aspect, the MIMO detector is configured to estimate the transmitted vector based on an information of candidate vectors from different iterations, wherein the information includes an error measure of candidate vectors of different iterations.

Estimating the transmitted vector based on error measure values that were computed for previously evaluated vectors has the advantage that a transmitted vector with a low error measure can be determined.

In a seventh implementation of the MIMO detector according to the first aspect, the MIMO detector further comprises an initialization unit configured to determine a first initial vector based on a result of a minimum mean square error search and/or a random selection.

Having a first initial vector based on a different MIMO detection mechanism has the advantage that the search can be started with a good starting point. Thus, the search is more likely to arrive at a good estimate.

In an eighth implementation of the MIMO detector according to the first aspect, the error measure is given by:

$$E = \|Y - HX\|^2$$

wherein $\|\cdot\|$ is an Euclidean norm, *y* is a vector of the plurality of received signals, *H is* a channel matrix, and *x* is a vector of the vector of transmitted symbols.

This has the advantage that the error measure is easy to compute and is based on the knowledge of the channel.

In a ninth implementation of the MIMO detector according to the first aspect the gradient is computed as:

$$\nabla E = \begin{bmatrix} -2Z_{re} + 2R_{re}X_{re} - 2R_{im}X_{im} \\ -2Z_{im} + 2R_{re}X_{im} - 2R_{im}^T X_{re} \end{bmatrix},$$

and/or wherein the gradient is computed as:

$$\nabla E = -2Z_{re} + 2R_{re}X$$

wherein $Z = H^H Y$, $R = H^H H$, $(\cdot)_{re}$ refers to a real component of a complex vector, $(\cdot)_{im}$ refers to an imaginary component of a complex vector, $(-)^H$ is a matrix conjugate transpose, and $(\cdot)^T$ is a matrix transpose.

This has the advantage that an efficient way of computing the gradient is provided.

A second aspect of the invention refers to a method for estimating from a plurality of received signals a transmitted vector of symbols that have been transmitted with a plurality of transmitters, the method comprising:

- determining a gradient of an error measure between an initial vector and the plurality of received signals,
- determining one or more candidate vectors by moving from the initial vector into one or more search directions indicated by one or more elements of the gradient of the initial vector, and
- determining an estimate of the transmitted vector based on the one or more candidate vectors.

The methods according to the second aspect of the invention can be performed by the MIMO detector according to the first aspect of the invention. Further features or implementations of the method according to the second aspect of the invention can perform the functionality of the MIMO detector according to the first aspect of the invention and its different implementation forms.

In a first implementation of the method of the second aspect, moving into a search direction comprises moving a step with a step size equal to a minimum distance between two points in a constellation of a modulation of the transmitted symbols.

In a second implementation of the method of the second aspect, further comprising an initial step of determining a first initial vector based on a result of a minimum mean square error search and/or a random selection.

In a third implementation of the method of the second aspect, the error measure is given by:

$$E = \|Y - HX\|^2$$

wherein $\|\cdot\|$ is an Euclidean norm, $Y$ is a vector of the plurality of received signals, $H$ is a channel matrix, and $X$ is a vector of the vector of transmitted symbols.

A third aspect of the invention refers to a computer-readable storage medium storing program code, the program code comprising instructions for carrying out the method of the second aspect or one of its implementations.

BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

FIG. 1    is a block diagram illustrating a MIMO detector in accordance with an embodiment of the present invention;

FIG. 2    is a block diagram illustrating a method in accordance with a further embodiment of the present invention;

FIG. 3    is a flow chart of a MIMO detector based on Gradient searching in accordance with a further embodiment of the present invention;

FIG. 4    is an illustration of basic gradient searching in accordance with a further embodiment of the present invention; and

FIG. 5    shows a performance of GS MIMO detection in accordance with a further embodiment of the present invention.

DETAILED DESCRIPTION OF THE EMBODIMENTS

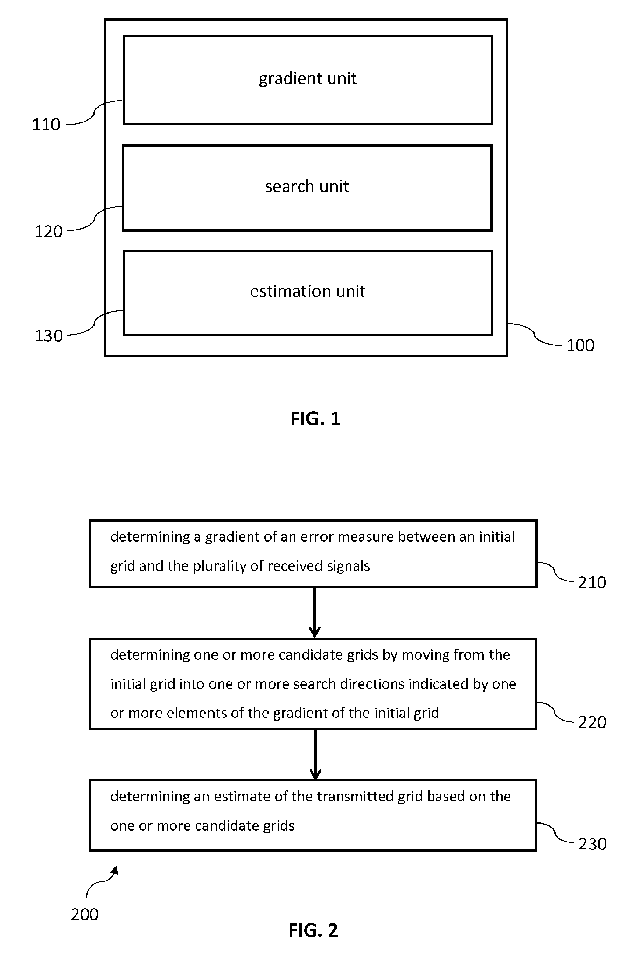

FIG. 1 shows a MIMO detector 100 for estimating from a plurality of received signals a transmitted vector of symbols that have been transmitted with a plurality of transmitters. The MIMO detector comprises a gradient unit 110, a search unit 120 and an estimation unit 130. The units 110, 120, 130 can be implemented on the same processor.

The gradient unit 110 is configured to determine a gradient of an error measure between a vector and the plurality of received signals. For example, the error measure can be based on a difference between a candidate vector and a channel matrix multiplied with a vector of received signals.

The search unit 120 is configured to determine one or more candidate vectors by moving from an initial vector into one or more search directions indicated by one or more elements of a gradient of the initial vector. Preferably, the one or more candidate vectors are stored in a vector database. For example, the candidate vectors can be stored together with the error measure that was determined for the candidate vectors.

The estimation unit 130 is configured to determine an estimate of the transmitted vector based on the one or more candidate vectors. For example, the estimation unit can be configured to select as estimate the candidate vector from the database of candidate vectors that has the lowest corresponding error measure.

The MIMO detector 100 may further comprise an initialization unit (not shown in FIG. 1), wherein the initialization unit is configured to determine a first initial vector based on a result of an initial vector determination, e.g. a minimum mean square error search and/or a random selection.

FIG. 2 shows a method 200 for estimating from a plurality of received signals a transmitted vector of symbols that have been transmitted with a plurality of transmitters.

The method comprises a first step 210 of determining a gradient of an error measure between an initial vector and the plurality of received signals.

The method comprises a second step 220 of determining one or more candidate vectors by moving from the initial vector into one or more search directions indicated by one or more elements of the gradient of the initial vector.

The method comprises a further step 230 of determining an estimate of the transmitted vector based on the one or more candidate vectors.

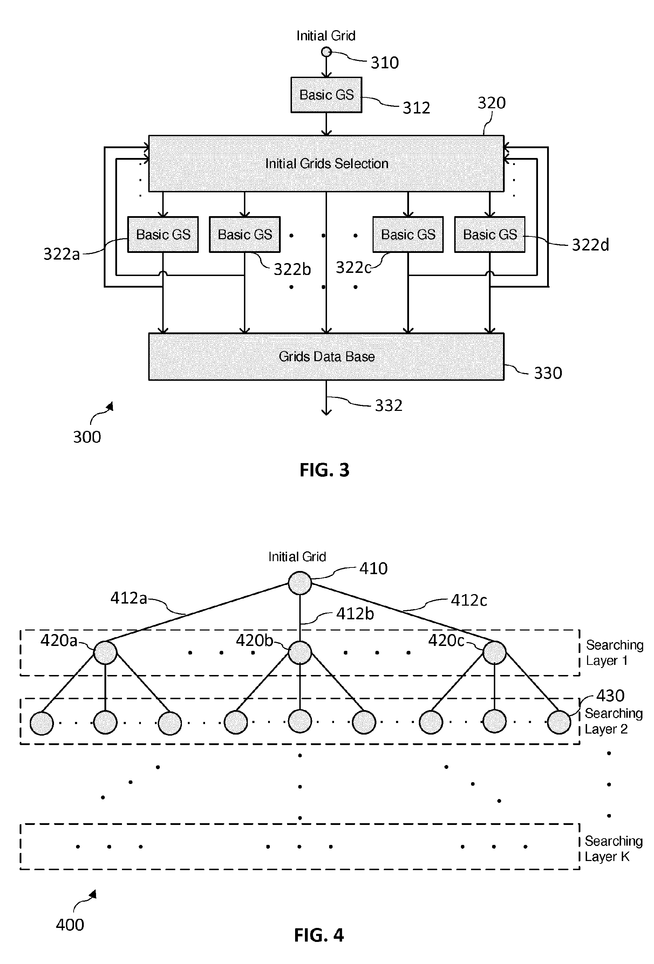

FIG. 3 shows another flow chart of a MIMO detection method 300 in accordance with a further embodiment of the present invention.

The method starts with an initial grid 310, which is an initial vector of symbols. This initial grid is used as starting point of a basic gradient search, "Basic GS", indicated with reference number 312. The basic grid search is carried out as indicated below in FIG. 4.

In a further block, indicated with reference number 320, a plurality of further initial vectors of symbols are selected. This can be based on the candidate grids that have been determined in block 312.

The further initial vectors are used as starting points for further basic grid searches, indicated with reference numbers 322a, 322b, 322c, 322d. The candidate vectors determined in the further Basic GS blocks 322a-322d are stored in a grids database, indicated with reference number 330. From the candidate grids stored in the grids database 330, an estimate 332 of the transmitted grid of symbols can be derived.

A further example method for estimating from a plurality of received signals a transmitted vector of signals includes the following steps, not necessarily in that order:

1. GS MIMO detection starts from at least one initial vector and approaches the best vector with the minimal square error along a direction indicated by a gradient of a square error, which can be done in an iterative way. The search is carried out by iteratively determining candidate vectors which correspond to a possible transmitted symbol vector $X \in \Omega^{N_T}$.

2. A certain number of initial vectors are chosen for each iteration and one Basic Gradient Search (Basic GS) starts from one initial vector.

3. For the first iteration, the result(s) of a simple MIMO detection (e.g., MMSE) can be used as initial vector(s) or the random vector(s) can be chosen as initial vector(s).

4. The initial vectors for an $i^{th}$ ($i>1$) iteration can be selected from the searched vectors in previous iteration(s) u, $1 \le u < i$.

5. The best hard-decision of $X$ and/or the soft value of each bit in $X$ can be computed based on the information of searched vectors in different iterations, where the information of each searched candidate vector here can comprise the square error $\|Y - HX\|^2$, wherein $X$ is a candidate vector; $Y$ is a vector of received signals; and $H$ is a channel matrix.

6. Basic GS can have a certain number of searching layers; there is one initial vector for the first layer and there are a certain number of initial vectors for other searching layer(s).

7. For a searching layer in Basic GS, the gradient of the square error for each initial vector will indicate $2^M - 1$ possible directions to decrease the square error, where $M$ is the size of gradient. A sub set of the directions can be chosen for searching the neighboring vectors. The chosen grids to be searched are the initial vectors for the next searching layer.

8. The gradient of each initial vector can be calculated from the equation:

$$\nabla E = \begin{bmatrix} -2Z_{re} + 2R_{re}X_{re} - 2R_{im}X_{im} \\ -2Z_{im} + 2R_{re}X_{im} - 2R_{im}^{T}X_{re} \end{bmatrix}, Z = H^{H}Y, R = H^{H}H$$

where $(\cdot)_{re}$ refers to the real component of a complex vector; $(\cdot)_{im}$ refers to the imaginary component of a complex vector; $(\text{-})^{H}$ is the operation of matrix conjugate transpose; and $(\cdot)^{T}$ is the operation of matrix transpose.
Note that, if the element in **X** is real data, then the gradient can be determined as:

$$\nabla E = -2Z_{re} + 2R_{re}X.$$

The "Basic GS" blocks 320, 322a-322d shown in FIG. 3 start from an initial vector to search for candidate vectors with smaller square errors. The search can be carried out along a direction indicated by a gradient of an error measure, e.g. a square of the norm of the difference between a vector of the plurality of received signals and a channel matrix multiplied with the candidate vector of transmitted symbols.

FIG. 4 illustrates the basic gradient search, Basic GS, 400 according to embodiments of the present invention in more detail:

The basic gradient search 400 starts from an initial grid 410, which is an initial vector. From this starting point, a search is carried out in a plurality of directions 412a, 412b, 412c which are identified by a gradient which can be computed as:

$$\nabla E = \begin{bmatrix} g_1 \\ \vdots \\ g_M \end{bmatrix} = \begin{bmatrix} -2Z_{re} + 2R_{re}X_{re} - 2R_{im}X_{im} \\ -2Z_{im} + 2R_{re}X_{im} - 2R_{im}^{T}X_{re} \end{bmatrix}, Z = H^{H}Y, R = H^{H}H, M = 2N_T$$

where $(\cdot)_{re}$ refers to the real component of a complex vector; $(\cdot)_{im}$ refers to the imaginary component of a complex vector; $(\text{-})^{H}$ is the operation of matrix conjugate transpose; and $(\cdot)^{T}$ is the operation of matrix transpose.

Note that the first half of the gradient corresponds to the real component of **X** and the second half of the gradient corresponds to the imaginary component of **X** which is shown below:

$$\begin{bmatrix} g_1 \\ \vdots \\ g_{N_T} \\ g_{N_T+1} \\ \vdots \\ g_{2N_T} \end{bmatrix} \begin{matrix} \leftrightarrow \\ \leftrightarrow \\ \leftrightarrow \\ \leftrightarrow \\ \leftrightarrow \\ \leftrightarrow \end{matrix} \begin{bmatrix} Re(x_1) \\ \vdots \\ Re(x_{N_T}) \\ Im(x_1) \\ \vdots \\ Im(x_{N_T}) \end{bmatrix}$$

If the elements in $\Omega$ are all real data, then the following gradient can be used instead:

$$\nabla E = \begin{bmatrix} g_1 \\ \vdots \\ g_M \end{bmatrix} = -2Z_{re} + 2R_{re}X, M = N_T$$

That is, the size of $\nabla E$ is M = $2N_T$ for complex constellation and it is M = $N_T$ otherwise, wherein $N_T$ is the number of transmitted symbols.

To reach candidate vectors with smaller square error, Basic GS should search the vectors along the direction of - $\nabla E$. That is, if the sign of $-g_m$ is positive (negative), the corresponding real or imaginary component should increase (decrease) one step. The step can be the minimum distance between two points in the constellation. Note that, if the one step moving indicated by $-g_m$ will make the corresponding real or imaginary component out of the constellation, then such moving can be discarded.

For each $-g_m$, Basic GS can choose to move or not, so the maximal number of potential moving directions (or vectors to be searched) is $2^M$. If the Basic GS chooses no moving for all the directions, it will stay in the initial vector, which should be excluded actually, so the actual maximal number of potential vectors to be searched is $2^M$ - 1. And a sub set of the $2^M$ - 1 can be chosen to search.

Note that, unlike in sphere decoding, a candidate vector in the basic grid search, Basic GS, typically corresponds to a plurality of transmitted vectors, i.e., a candidate vector is an element of $\Omega^{N_T}$.

The Basic GS can be configured to repeatedly use determined candidate vectors as starting points for further searches in a gradient direction. Thus, as shown in FIG. 4, from the candidate vectors 420a, 420b 420c, in the Searching Layer 1, further candidate vectors 430 in the subsequent Searching Layer 2 are created.

In other words, after each iteration, a certain number of searched vectors can be chosen as the initial vectors for next iteration. E.g. a certain number of vectors with small square errors, which have not been used as initial vectors for Basic GS can be chosen as the initial vectors for next iteration.

A vector database, e.g. the Grids Data Base of FIG. 3, stores the candidate vectors and their error measure values as well as optionally some other information for the searched candidate vectors. This can be used to make a hard-decision of **X** and/or the soft value of each bit.

A hard decision can be obtained as the vector with minimal square error among the searched candidate vectors:

$$\widehat{X} = \arg \min_{x \in S} \|Y - HX\|^2$$

where $S \subseteq \Omega$ is the set of searched candidate vectors and $\hat{X}$ is the hard decision of transmitted symbol vector **X.**

If a simple MIMO detection, e.g. MMSE, is used to generate the initial vector(s) for GS MIMO detection, the soft value of each bit based on simple MIMO detection and the soft value of each bit based on GS MIMO detection can be combined, for example according to the equation:

$$\hat{b}_{a,n} = (1 - \lambda)\hat{b}'_{a,n} + \lambda\hat{b}^{GS}_{a,n}$$

where $\hat{b}'_{a,n}$ is the soft bit value of $a^{th}$ bit of in $n^{th}$ transmission layer based on simple MIMO detection and $\hat{b}^{GS}_{a,n}$ is the soft bit value of an $a^{th}$ bit in an $n^{th}$ transmission layer based on GS MIMO detection; $\lambda$ is the combining weight.

As illustrated above, embodiments of the invention introduce the gradient for MIMO detection. Its performance can be very close to ML. Its complexity has linear increase along the transmission layers, which is because its complexity mainly depends on the number of iterations and searching layers.

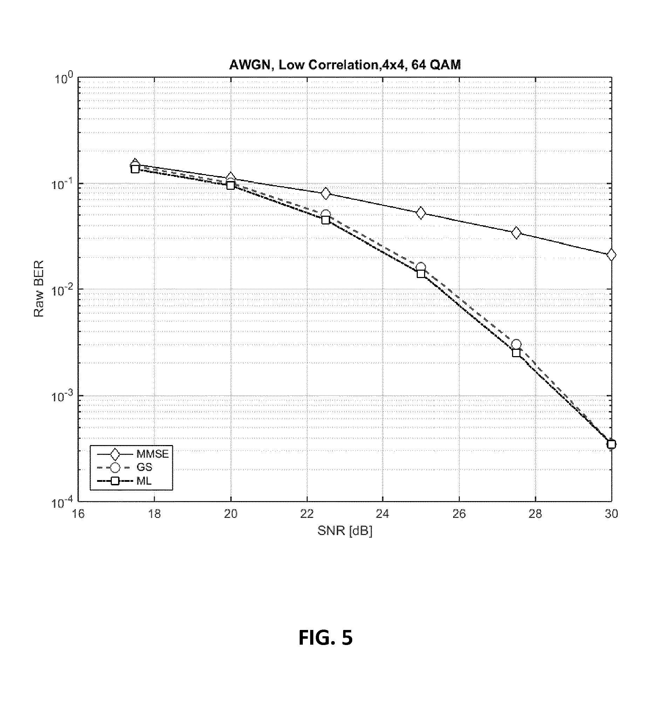

The performance for PAPR reduction of the presented MIMO detectors is shown in FIG. 5, wherein the line denoted with GS corresponds to the performance of the above-presented MIMO Detector, ML corresponds to a maximum-likelihood detector and MMSE corresponds to a minimum mean-squared error search as used in conventional solutions. The corresponding simulation configuration of the GS method is shown in Table 1 below:

**Table 1 Simulation Configuration**

| Channel | AWGN, Low Correlation |
|---|---|
| Number of transmission layers | 4 |
| $N_T$ | 4 |
| $N_R$ | 4 |
| Number of initial vector for 1st iteration | 1 |
| Number of initial vector for $i^{th}$ (i>1) iteration | 8 |
| Iteration Number | 3 |
| Number of Searching layers | 3 |

The foregoing descriptions are only implementation manners of the present invention, the protection of the scope of the present invention is not limited to this. Any variations or replacements can be easily made through person skilled in the art. Therefore, the protection scope of the present invention should be subject to the protection scope of the attached claims.

**Claims**

1. A MIMO detector (100) for estimating from a plurality of received signals a transmitted vector of symbols that have been transmitted with a plurality of transmitters, wherein the MIMO detector comprises:

   - a gradient unit (110) configured to determine a gradient of an error measure between a vector and the plurality of received signals,
   - a search unit (120) configured to determine one or more candidate vectors (420a, 420b, 420c, 430) by moving from an initial vector (310; 410) into one or more search directions (412a, 412b, 412c) indicated by one or more elements of a gradient of the initial vector, and
   - an estimation unit (130) configured to determine an estimate of the transmitted vector based on the one or more candidate vectors.

2. The MIMO detector (100) of claim 1, wherein the search unit (120) is configured to select the one or more search directions (412a, 412b, 412c) based on one or more elements of the gradient by selecting a predetermined number of elements of the gradient which have a highest absolute value.

3. The MIMO detector (100) of one of the previous claims, wherein moving into a search direction (412a, 412b, 412c) comprises moving a step with a step size equal to a minimum distance between two points in a constellation of a modulation of the transmitted symbols.

4. The MIMO detector (100) of one of the previous claims, wherein the search unit (120) is configured to reject a candidate vector if it is not within a constellation of a modulation of the transmitted symbols.

5. The MIMO detector (100) of one of the previous claims, wherein the search unit (120) is configured to determine a plurality of layers of candidate vectors by iteratively:

   a) moving from an initial vector (310; 410) into one or more search directions (412a, 412b, 412c) to obtain one or more candidate vectors, and
   b) setting the one or more candidate vectors as new initial vectors, and continuing with step a).

6. The MIMO detector (100) of one of the previous claims, wherein the MIMO detector is configured to:

   a) invoke the search unit (120) with one or more initial vectors (310) to determine one or more candidate vectors,
   b) select one or more selected candidate vectors from one or more current candidate vectors of a current iteration and/or from one or more previous candidate vectors of one or more previous iterations, and
   c) set the one or more selected candidate vectors as initial vectors and continue with step a).

7. The MIMO detector (100) of one of the previous claims, wherein the MIMO detector is configured to estimate the transmitted vector based on an information of candidate vectors from different iterations, wherein the information includes an error measure of candidate vectors of different iterations.

8. The MIMO detector (100) of one of the previous claims, further comprising an initialization unit (140) configured to determine a first initial vector based on a result of a minimum mean square error search and/or a random selection.

9. The MIMO detector (100) of one of the previous claims, wherein the error measure is given by:

$$E = \|Y - HX\|^2$$

wherein $\|\cdot\|$ is an Euclidean norm, $y$ is a vector of the plurality of received signals, $H$ is a channel matrix, and $x$ is a vector of the vector of transmitted symbols.

10. The MIMO detector (100) of claim 9, wherein the gradient is computed as:

$$\nabla E = \begin{bmatrix} -2\boldsymbol{Z}_{re} + 2\boldsymbol{R}_{re}\boldsymbol{X}_{re} - 2\boldsymbol{R}_{im}\boldsymbol{X}_{im} \\ -2\boldsymbol{Z}_{im} + 2\boldsymbol{R}_{re}\boldsymbol{X}_{im} - 2\boldsymbol{R}_{im}^{T}\boldsymbol{X}_{re} \end{bmatrix},$$

and/or wherein the gradient is computed as:

$$\nabla E = -2\boldsymbol{Z}_{re} + 2\boldsymbol{R}_{re}\boldsymbol{X}$$

wherein $\boldsymbol{Z} = \boldsymbol{H}^{\mathsf{H}}\boldsymbol{Y}$, $\boldsymbol{R} = \boldsymbol{H}^{\mathsf{H}}\boldsymbol{H}$, $(\cdot)_{re}$ refers to a real component of a complex vector, $(\cdot)_{im}$ refers to an imaginary component of a complex vector, $(\cdot)^{H}$ is a matrix conjugate transpose, and $(\cdot)^{T}$ is a matrix transpose.

11. A method (200; 300) for estimating from a plurality of received signals a transmitted vector of symbols that have been transmitted with a plurality of transmitters, the method comprising:

- determining (210) a gradient of an error measure between an initial vector (310; 410) and the plurality of received signals,
- determining (220) one or more candidate vectors (420a, 420b, 420c, 430) by moving from the initial vector into one or more search directions (310; 410) indicated by one or more elements of the gradient of the initial vector, and
- determining (230) an estimate of the transmitted vector based on the one or more candidate vectors.

12. The method (200; 300) of claim 11, wherein moving into a search direction comprises moving a step with a step size equal to a minimum distance between two points in a constellation of a modulation of the transmitted symbols.

13. The method (200; 300) of claim 11 or 12, further comprising an initial step of determining a first initial vector based on a result of a minimum mean square error search and/or a random selection.

14. The method (200; 300) of one of claims 11 to 13, wherein the error measure is given by:

$$E = \|\boldsymbol{Y} - \boldsymbol{H}\boldsymbol{X}\|^{2}$$

wherein $\|\cdot\|$ is an Euclidean norm, $\boldsymbol{y}$ is a vector of the plurality of received signals, $\boldsymbol{H}$ is a channel matrix, and $\boldsymbol{x}$ is a vector of the vector of transmitted symbols.

15. A computer-readable storage medium storing program code, the program code comprising instructions for carrying out the method of one of claims 11 to 14.

gradient unit

110

search unit

120

estimation unit

130

100

**FIG. 1**

determining a gradient of an error measure between an initial grid and the plurality of received signals

210

determining one or more candidate grids by moving from the initial grid into one or more search directions indicated by one or more elements of the gradient of the initial grid

220

determining an estimate of the transmitted grid based on the one or more candidate grids

230

200

**FIG. 2**

Initial Grid

○ —— 310

Basic GS —— 312

320

Initial Grids Selection

Basic GS  Basic GS  ·  ·  Basic GS  Basic GS —— 322d

322a —  —322b  322c—

Grids Data Base —— 330

—— 332

300

**FIG. 3**

Initial Grid

○ —410

412a—  —412b  —412c

420a—  420b—  420c— | Searching Layer 1

430 Searching Layer 2

Searching Layer K

400

**FIG. 4**

**FIG. 5**

Europäisches
Patentamt

European
Patent Office

Office européen
des brevets

# EUROPEAN SEARCH REPORT

Application Number

EP 15 19 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARAVINDAN I ET AL: "A performance study of MIMO detectors in the presence of channel estimation errors", 2015 INTERNATIONAL CONFERENCE ON COMMUNICATION, INFORMATION & COMPUTING TECHNOLOGY (ICCICT), IEEE, 15 January 2015 (2015-01-15), pages 1-5, XP032737771, DOI: 10.1109/ICCICT.2015.7045683 [retrieved on 2015-02-19] * Subsection A.Likelihood Ascent Search. * ----- | 1-15 | INV. H04L25/03 |
| X | NISSANI D N: "The MIMO and ISI Detection Problems: A Common Model and a Quasi Optimal, Quadratic Complexity Solution", 2009 IEEE 69TH VEHICULAR TECHNOLOGY CONFERENCE; APRIL 26-29, 2009, BARCELONA, SPAIN, IEEE, PISCATAWAY, NJ, USA, 26 April 2009 (2009-04-26), pages 1-6, XP031474828, ISBN: 978-1-4244-2517-4 * abstract * * Section IV. Proposed detection method * ----- | 1-15 | |
| X | VISHNU VARDHAN K ET AL: "A Low-Complexity Detector for Large MIMO Systems and Multicarrier CDMA Systems", IEEE JOURNAL ON SELECTED AREAS IN COMMUNICATIONS, IEEE SERVICE CENTER, PISCATAWAY, US, vol. 26, no. 3, 1 April 2008 (2008-04-01), pages 473-485, XP011206978, ISSN: 0733-8716 * Subsection A. Proposed LAS Algorithm. Pages 475 and 476. * ----- | 1-15 | TECHNICAL FIELDS SEARCHED (IPC) H04L |

The present search report has been drawn up for all claims

| Place of search | Date of completion of the search | Examiner |
|---|---|---|
| Munich | 22 February 2016 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)